# EUROPEAN PATENT APPLICATION

(11) **EP 4 462 324 A1**
(43) Date of publication of application: **13.11.2024**
(21) Application number: 24174645.2
(22) Date of filing: 07.05.2024
(51) Int. Cl.: G06Q 10/04, F17D 5/02, G01D 4/00, G01M 3/24, G06Q 50/06, G06V 20/52

(54) **DETECTION OF UNINTENDED CONSUMPTION OF A UTILITY COMMODITY BASED ON METROLOGY DATA**

(30) Priority: 09.05.2023 US 202318314318
(71) Applicant: ITRON, INC., Liberty Lake, WA 99019 (US)
(72) Inventor: WADAGERI, Mohammad Iqbal, Liberty Lake, 99019 (US); MAIYA, Gundumi Subraya Raghavendra, Liberty Lake, 99019 (US); PILAKKAT, Sajeesh, Liberty Lake (US); VOLAM, Praveen Kumar, Liberty Lake (US)
(74) Representative: Morrall, Jonathan Ian McLachlan

(57) **Abstract**

Various embodiments disclose a method comprising receiving, by a computing device, metrology data indicating consumption of a plurality of utility commodities at a location, determining, by the computing device based on the metrology data, that the location is not occupied, determining, by the computing device, that the metrology data indicates that consumption of a first utility commodity of the plurality of utility commodities is atypical, and in response to determining that the location is not occupied and that consumption of the first utility commodity is atypical, performing, by the computing device, a responsive action.

## Description

### BACKGROUND

### Field of the Various Embodiments

The various embodiments relate generally to monitoring consumption of utility commodities, and more specifically, to detecting the unintended consumption of a utility commodity based on metrology data.

Home automation systems include a network of various electronic devices, such as smart utility meters, that can be interconnected with one another and/or connected to other devices outside of the home automation system via the global Internet of Things (loT). Smart utility meters electronically record the consumption of utility commodities, such as water, electricity, and gas, and transmit metrology data indicative of the recorded commodity consumption to other devices. For example, for billing purposes, a smart utility meter transmits metrology data indicative of consumption of a utility commodity to a backend computing device of a utility provider. Smart utility meters are also capable of two-way communication in which smart utility meters can share metrology data and other information with other smart utility meters in the home automation system. Additionally, smart utility meters can receive configuration parameters, software updates, and other information from remote computing devices of the utility provider.

### BRIEF DESCRIPTION OF THE DRAWINGS

So that the manner in which the features of the various embodiments can be understood in detail, a description of the inventive concepts may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIG. 1 illustrates an example flow diagram showing a process for detecting atypical consumption of a utility commodity at an unoccupied location, according to various embodiments;
FIG. 2 illustrates a metering device, according to various embodiments;
FIG. 3 illustrates a computing device, according to various embodiments;
FIG. 4 is a flow diagram of method steps for training an algorithm for detecting an unoccupied location and atypical consumption of a utility commodity, according to various embodiments.
FIG. 5 illustrates sample metrology data indicative of normal consumption of utility commodities when a location is occupied and unoccupied, according to various embodiments;
FIG. 6 illustrates metrology data indicative of atypical consumption of a utility commodity when a property is unoccupied, according to various embodiments; and
FIG. 7 illustrates a machine learning model for detecting an unoccupied location and atypical utility commodity consumption, according to various embodiments.
FIG. 8 illustrates another machine learning model for detecting an unoccupied location and atypical utility commodity consumption, according to various other embodiments.
FIG. 9 is a flow diagram of method steps for detecting atypical consumption of a utility commodity at an unoccupied property, according to various embodiments.
FIG. 10 is a flow diagram of method steps for detecting atypical consumption of a utility commodity at an unoccupied property, according to various other embodiments.
FIG. 11 illustrates a network system, configured to implement one or more aspects of the various embodiments.

### DETAILED DESCRIPTION

Property damage attributed to water overflow and flooding can be minimized or even prevented if the cause of the damage, such as a leaking plumbing fixture or a broken pipe, is detected early enough. However, when a property such as a residential home or a commercial building is unoccupied, it can be difficult to detect the source of the overflow or flooding before a significant amount of water damage has occurred at the property.

Although many systems that can detect the occurrence of water leaks and/or flooding have been developed, such systems can be expensive and might include numerous components that are difficult to install and maintain. In addition, while conventional leak and flood detection systems can be effective in detecting the occurrence of leaks or flooding caused by leaky pipes, plumbing fixtures, or appliances, such systems are much less effective in detecting other instances of unintended water consumption that can also result in overflow or flooding. For example, before leaving the house, a homeowner may forget to shut off a faucet. When the faucet is left running for an extended period of time, a significant amount of water is wasted and, in addition, the sink might overflow with no one present to stop the eventual subsequent flooding. Because a faucet that has intentionally been turned on is not indicative of a leaking or otherwise damaged pipe or plumbing fixture, however, conventional leak and flood detection systems would not detect this occurrence of unintended water consumption until and unless the sink has overflown and flooded the house in an area where a leak detection sensor is located.

Similar to property damage attributed to water overflow and flooding, property damage attributed to the buildup and potential combustion of gas (e.g., natural gas) can be prevented if the source of the gas buildup is detected early enough. Example sources of unintended gas buildup in a property include a leaking gas pipe or an unignited stove burner that has mistakenly been left on. Although many systems that can detect the occurrence of gas leaks and subsequent buildup have been developed, such systems can be expensive and are often incapable of detecting instances of gas leaks occurring in an area of a property that is not within detection range of a gas detection system. Furthermore, even though odor emanating from a gas leak or buildup can sometimes be detected by persons that are occupying a property, such gas leaks and buildups cannot be detected when the property is unoccupied and without an effective gas detection system. These gas leaks and buildup that go undetected for an extended period of time result in large amounts of wasted gas and potential catastrophic damage to the property in the form of a fire or explosion.

In order to address these shortcomings, techniques are disclosed herein that enable detection of all instances of unintended commodity consumption, such as a leaking water pipe, a leaking gas pipe, or a running faucet, that could result in significant waste of the commodity and/or damage to the property when the property is unoccupied. In various embodiments, a computing device can detect the occurrence of unintended consumption of a utility commodity, such as water or gas, based on an occupancy status of a property determined from metrology data indicative of the consumption of utility commodities, such as water, gas, and/or electricity, at the property. For example, over time, the computing device can determine one or more normal ranges for the consumption of one or more utility commodities while a property is occupied and one or more normal ranges for the consumption of one or more utility commodities while a property is unoccupied.

In some embodiments, the computing device determines whether a property is occupied or unoccupied based on metrology data indicative of the consumption of the plurality of utility commodities at the property. For example, the computing device can determine that the property is unoccupied when a detected consumption of utility commodities at the property corresponds to the determined pattern of regular utility commodity consumption when the property is unoccupied. Further, the computing device can determine that consumption of a particular utility commodity at a property is atypical based on metrology data indicative of the consumption of that particular utility commodity at the property. "Atypical" consumption of a utility commodity can include consumption of a utility commodity that diverges from regular patterns of consumption of the utility commodity. For example, the computing device can determine that consumption of a first utility commodity, such as water or gas, is atypical when the detected consumption of the first utility commodity exceeds the normal range(s) of consumption of the first utility commodity. In some embodiments, when the computing device determines that a property is unoccupied and/or that consumption of a first utility commodity is atypical, the computing device performs one or more responsive actions (e.g., shutting off supply of the first utility commodity, notifying a user to the occurrence of the atypical consumption of the first utility commodity, etc.).

At least one technical advantage of the disclosed techniques is that, with the disclosed techniques, unintended consumption of a utility commodity, such as water or gas, can be detected without the use of additional sensors such as expensive leak and/or flood detection systems. In this regard, the disclosed techniques utilize metrology data that is already being collected for other purposes (e.g., metering) to detect the occurrence of unintended, or atypical, consumption of a utility commodity at a property. Moreover, by analyzing the metrology data indicative of the consumption of a plurality of utility commodities, the disclosed techniques are capable of detecting instances of unintended commodity consumption that would not be detected by conventional leak and/or flood detection systems. Another technical advantage of the disclosed techniques is that, with the disclosed techniques, occupancy of a property can be determined without the use of conventional occupancy sensors (e.g., motion sensors, light sensors, door sensors, etc.). In this regard, the disclosed techniques further utilize the metrology data that is already being collected for other purposes to determine whether the property is occupied.

### Detection of Unintended Utility Commodity Consumption

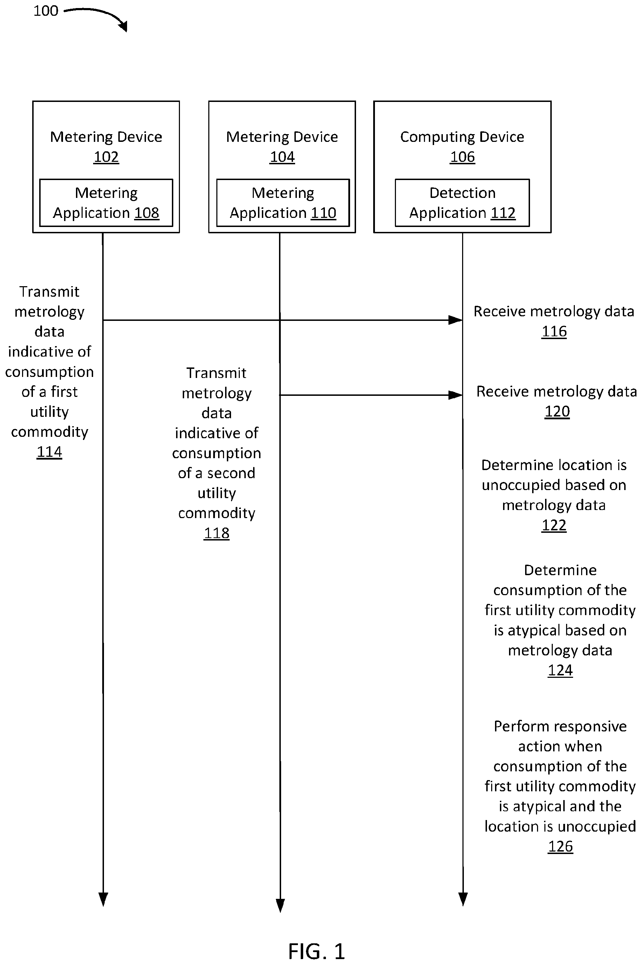

FIG. 1 illustrates an example flow diagram showing process 100 for detecting unintended consumption of a utility commodity at an unoccupied location, according to various embodiments. Although the interactions between the devices in process 100 are shown in an order, persons skilled in the art will understand that the interactions may be performed in a different order, interactions may be repeated or skipped, and/or may be performed by components other than those described in FIG. 1.

As shown in FIG. 1, process 100 involves various operations performed by, without limitation, first metering device 102, second metering device 104, and computing device 106. Devices 102, 104, and 106 are connected by a communication medium (not shown). The communication medium can be, for example, a wired connection (e.g., an Ethernet connection or a power line communication connection) and/or a wireless connection (e.g., a Wi-Fi connection, a Bluetooth connection, or any other type of wireless connection). First metering device 102 and second metering device 104 can be located at the same location, such as a residential or commercial property, and computing device 106 can be located at the same location as first metering device 102 and second metering device 104 or at a different location, such as an office or other facility of a utility provider. In some embodiments, computing device 106 is implemented using another metering device. In other embodiments, computing device 106 is implemented using a home automation system, a server, and/or the like. Furthermore, although not shown, devices 102, 104, and 106 can be in communication with other devices by the same communication medium or different communication medium. Other devices connected to the home automation system can include (without limitation) one or more other metering devices, one or more other computing devices, one or more sensors, one or more smart appliances, and/or the like.

First metering device 102 is configured to execute a first metering application 108, which could, for example, be a software agent. First metering application 108 performs functions such as detecting consumption of a utility commodity, generating metrology data indicative of the consumption of the utility commodity, recording the metrology data, and transmitting the metrology data to one or more other devices. For example, first metering device 102 executes first metering application 108 to detect consumption of a first utility commodity, such as water or gas, and transmit metrology data indicative of the consumption of the first utility commodity to one or more other devices. Similarly, second metering device 104 is configured to execute second metering application 110 to detect consumption of a second utility commodity, such as electricity, and transmit metrology data indicative of the consumption of the second utility commodity to one or more other devices.

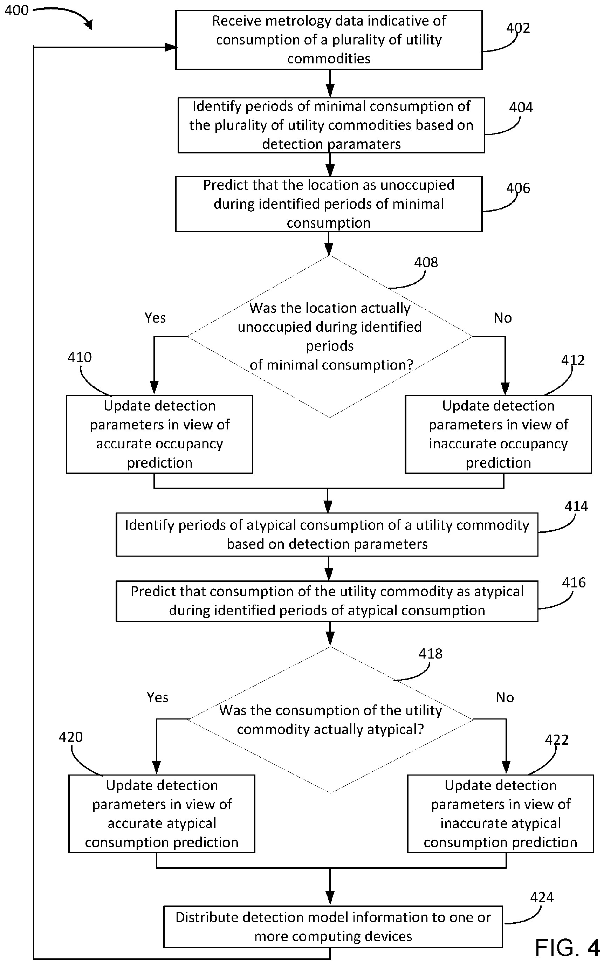

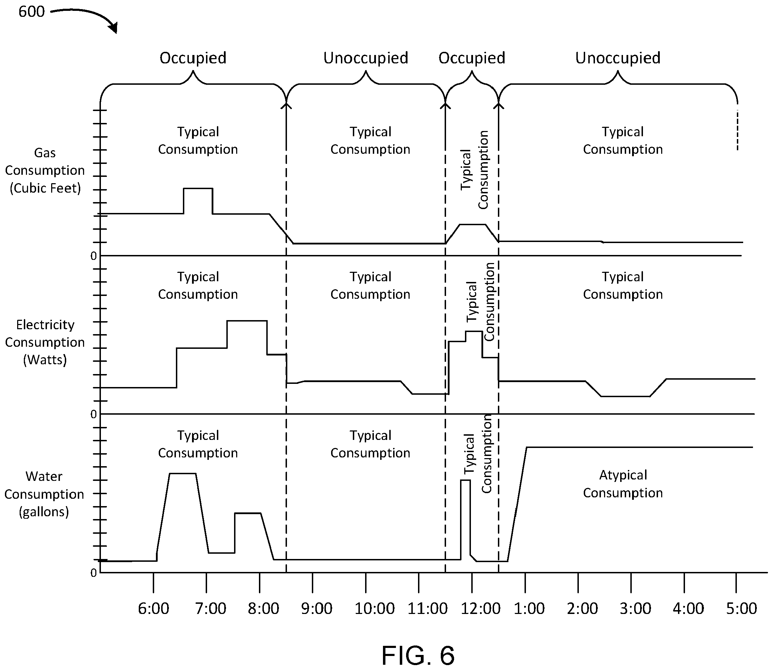

Further, computing device 106 is configured to execute detection application 112, which could, for example, be a software agent. Detection application 112 performs functions such as receiving metrology data from first metering device 102 and second metering device 104, determining whether a location is occupied based on the received metrology data, determining whether consumption of a utility commodity is atypical based on the received metrology data, and performing a responsive action when a location is unoccupied and consumption of a utility commodity is atypical. Atypical consumption of a utility commodity can include consumption of a utility commodity that diverges from regular patterns of consumption of the utility commodity. In some examples,, the atypical consumption of the utility commodity could correspond to unintended consumption of the utility commodity, consumption of the utility commodity that is higher than expected according to previous patterns of consumption, and/or the like. Further description of atypical consumption of a utility commodity is provided below with respect to FIGs. 4 and 6.

As shown, process 100 begins at step 114, in which first metering device 102 transmits metrology data indicative of consumption of a first utility commodity, such as water or gas, to computing device 106. The metrology data indicative of consumption of the first utility commodity is, for example, generated and transmitted using first metering application 108. The metrology data can be indicative of an amount of the first utility commodity that was consumed, a time at which the first utility commodity was consumed, a duration of time for which the first utility commodity was consumed, or some other information associated with consumption of the first utility commodity. At step 116, computing device 106 receives the metrology data indicative of the consumption of the first utility commodity.

At step 118, second metering device 104 transmits metrology data indicative of consumption of a second utility commodity, such as electricity, to computing device 106. The metrology data indicative of consumption of the second utility commodity is, for example, generated and transmitted using second metering application 110. The metrology data can be indicative of an amount of the second utility commodity that was consumed, a time at which the second utility commodity was consumed, a duration of time for which the second utility commodity was consumed, or some other information associated with consumption of the second utility commodity. At step 120, computing device 106 receives the metrology data indicative of the consumption of the second utility commodity.

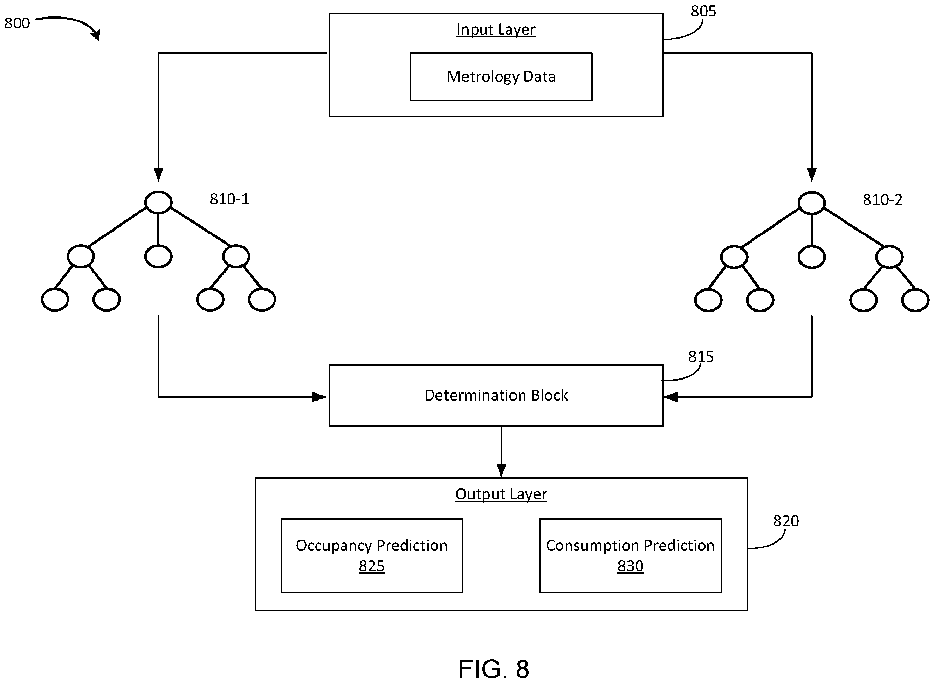

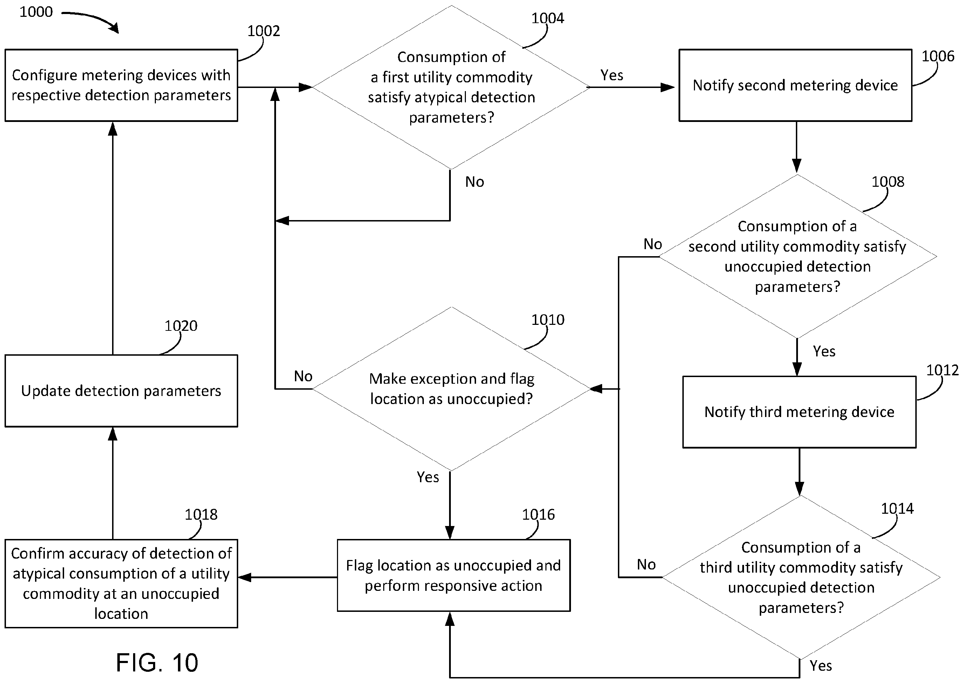

At step 122, computing device 106, using detection application 112, determines whether the location of first metering device 102 and second metering device 104 is occupied. In some embodiments, detection application 112 implements a detection algorithm to determine whether the location is occupied based on the metrology data received from first metering device 102 and second metering device 104. In some embodiments, detection application 112 determines whether the location is occupied by using a machine learning model that analyzes the metrology data indicative of consumption of the first and second utility commodities. In other embodiments, detection application 112 determines whether the location is occupied based on one or more detection parameters and/or thresholds associated with consumption of the first and second utility commodities. The one or more detection parameters and/or thresholds associated with consumption of the first and second utility commodities can be determined manually or by using a machine learning model, as is described in further detail below with respect to FIGs. 8 and 10.

As an example, in such embodiments, detection application 112 determines that the location is occupied when consumption or usage of the first utility commodity exceeds a first threshold and consumption of the second utility commodity exceeds a second threshold within the same period of time. Continuing with the same example, in such embodiments, detection application 112 determines that the location is unoccupied when consumption of the first utility commodity is less than the first threshold associated with consumption of the first utility commodity and consumption of the second utility commodity is less than second threshold associated with consumption of the second utility commodity within the same period of time. In some instances, detection application 112 can determine that the location is unoccupied when consumption of the first utility commodity exceeds the first threshold and consumption of the second utility commodity is less than the second threshold within the same period of time. In other instances, detection application 112 can determine that the location is occupied when consumption of the first utility commodity exceeds the first threshold and consumption of the second utility commodity is less than the second threshold within the same period of time. The location can, for example, a premises such as a residential property or and/or a commercial property.

At step 124, computing device 106, using detection application 112, determines whether the consumption or usage of the first utility commodity is atypical based on the metrology data received from first metering device 102 and second metering device 104. Atypical consumption of the first utility commodity can be (without limitation) unexpected or undesired consumption of the first utility commodity. The atypical consumption of the first utility can include (without limitation) an amount of consumption of the first utility commodity that exceeds a threshold, an amount of consumption of the first utility commodity that exceeds a threshold during a time period, a combination of the amount and time of consumption of the first utility commodity that diverges from a regular or expected pattern of consumption of the first utility commodity, significant consumption of the first utility commodity during a time period at which the location is determined to be unoccupied, or constant consumption of the first utility commodity for an extended period of time (e.g., a continuously running faucet that has been accidentally left on). In some embodiments, detection application 112 implements a detection algorithm to determine whether consumption of the first utility commodity is atypical. In some embodiments, detection application 112 determines whether consumption of the first utility commodity is atypical by using a machine learning model that analyzes the metrology data indicative of consumption of the first utility commodity. In other embodiments, detection application 112 determines whether consumption of the first utility commodity is atypical based on one or more detection parameters and/or thresholds associated with consumption of the first utility commodity. For example, detection application 112 compares an amount of the consumption of the first utility commodity during a time period to a detection threshold that is associated with atypical consumption of the first utility commodity and included in the one or more detection parameters. The one or more detection parameters and/or thresholds associated with consumption of the first utility commodity can be determined manually or by using a machine learning model, as is described in further detail below with respect to FIGs. 8 and 10.

In response to determining that the location is unoccupied and consumption of the first utility commodity is atypical, at step 126, computing device 106 performs a responsive action. In some embodiments, performing the responsive action can include transmitting a notification, such as a text message or e-mail, to a device of a user associated with the location (e.g., a home owner). The notification includes an indication that atypical consumption of the first utility commodity is occurring while the location is unoccupied. In such embodiments, the notification can further include a prompt for the user to confirm whether the location is unoccupied and/or the detected atypical consumption of the first utility commodity is intended. In some embodiments, performing the responsive action includes shutting off supply of the first utility commodity. For example, computing device 106 can shut off, via a shut-off device (e.g., a supply valve) included in or coupled to first metering device 102, supply of the first utility commodity to the location. In some embodiments, computing device 106 automatically shuts off supply of the first utility commodity to the location in response to determining that the location is unoccupied and consumption of the first utility commodity is atypical. In other embodiments, computing device 106 shuts off supply of the first utility commodity to the location after a user confirms that the atypical consumption of the first utility commodity is unintended.

Although computing device 106 is shown separate from first metering device 102 and second metering device 104, in alternate embodiments, the functionality of computing device 106 is performed by first metering device 102, second metering device 104, or distributed between first metering device 102 and second metering device 104. In these alternate embodiments, if first metering device 102 is configured to perform the actions described as being performed by computing device 106, first metering device 102 receives the metrology data indicative of consumption of the second utility commodity from second metering device 104, determines, using detection application 112, whether the location is occupied based on metrology data indicative of consumption of the first and second utility commodities, determines, using detection application 112, whether consumption of the first utility commodity is atypical based on the metrology data indicative of consumption of the first utility commodity, and performs, using detection application 112, the responsive action.

### Metering Device

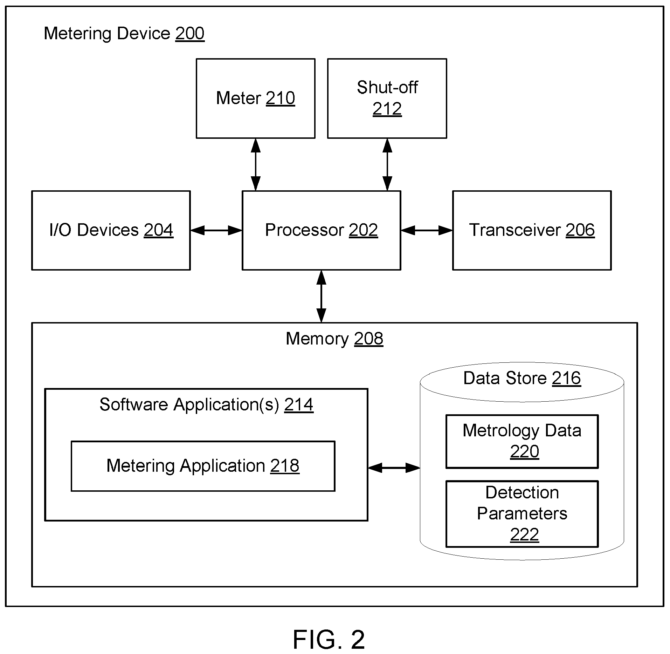

FIG. 2 illustrates a metering device 200, according to various embodiments. In some embodiments, metering device 200 is used to implement any of first metering device 102, second metering device 104, or computing device 106 of FIG. 1. As shown, metering device 200 includes, without limitation, processor 202, input/output (I/O) devices 204, transceiver 206, memory 208, meter 210, and shut-off 212, coupled together.

Processor 202 coordinates operations of metering device 200. In various embodiments, processor 202 includes any hardware configured to process data and execute software applications. The processor 202 can be any technically feasible processing device configured to process data and execute program instructions. For example, processor 202 could include one or more central processing units (CPUs), DSPs, graphics processing units (GPUs), application-specific integrated circuits (ASICs), field-programmable gate arrays (FPGAs), microprocessors, microcontrollers, other types of processing units, and/or a combination of different processing units. Processor 202 can include a real-time clock (RTC) (not shown) according to which processor 202 maintains an estimate of the current time. The estimate of the current time can be expressed in Universal Coordinated Time (UTC), although any other standard of time measurement can also be used.

I/O devices 204 include devices configured to receive input, devices configured to provide output, and devices configured to both receive input and provide output. Transceiver 206 is configured to transmit and/or receive metrology data and/or other messages to and from other devices, such as other metering devices 200, first metering device 102, second metering device 104, or computing device 106.

Memory 208 includes one or more software applications 214 and a data store 216, coupled together. As shown, the one or more software applications 214 include metering application 218. Data store 216 stores metrology data 220 that is indicative of consumption of a utility commodity. For example, the metrology data 220 is generated by metering application 218 which, when executed by processor 202, can perform any of the utility commodity metering functionality described herein. Data store 216 also stores one or more detection parameters 222. Detection parameters 222 can include one or more threshold or other parameters associated with atypical consumption of a utility commodity and/or consumption of a utility commodity at an unoccupied location. In some embodiments, detection parameters 222 include only detection parameters associated with consumption of the particular utility commodity that is being metered by metering device 200. For example, if metering device 200 is a water meter, detection parameters 222 would only include detection parameters associated with consumption of water. In other embodiments, detection parameters 222 also include detection parameters associated with consumption of other utility commodities that are not being metered by metering device 200. Detection parameters 222 can be determined manually or by using a machine learning model, as is described in further detail below with respect to FIGs. 4, 7, 8, and 10. In some embodiments, detection parameters 222 are received from one or more other devices.

In some embodiments, metering application 218 is used to implement any of first metering application 108 and/or second metering application 110 of FIG. 1. Metering application 218 interfaces with meter 210 to perform functions such as detecting consumption of a utility commodity (e.g., water, gas, or electricity), generating metrology data indicative of the consumption of the utility commodity, and recording the generated metrology data in data store 216 as metrology data 220. Meter 210 can include one or more of any known device used to measure electricity consumption, gas consumption, and/or water consumption. In some embodiments, metering application 218 interfaces with transceiver 206 to coordinate transmission and/or reception of metrology data and/or other messages to and from other devices. In some embodiments, metering application 218 interfaces with shut-off 212 to shut off supply of a utility commodity. Shut-off 212 can include one or more of any known device, such as a circuit breaker, a switch, or a control valve, used to shut off supply of a utility commodity to a location. In some embodiments, metering application 218 interfaces with shut-off 212 to shut off supply of a utility commodity when consumption of the utility commodity exceeds one or more detection parameters 222.

### Computing Device

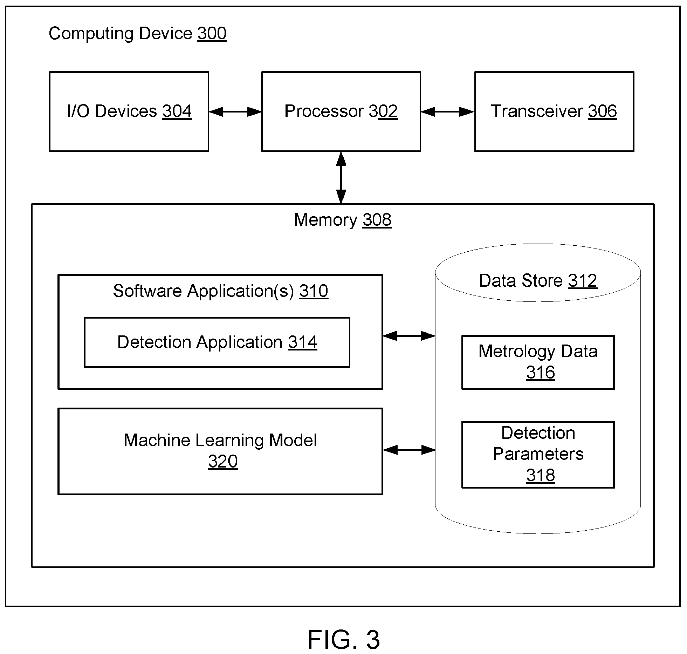

FIG. 3 illustrates computing device 300, according to various embodiments. In some embodiments, computing device 300 is used to implement computing device 106 of FIG. 1. In some embodiments computing device 300 is a computing device, such as a headend device, a backend server, or some other computing device, located at an office or other facility of a utility provider. In some embodiments, computing device 300 is a computing device associated with the location at which one or more utility commodities are consumed. As shown, computing device 300 includes, without limitation, processor 302, I/O devices 304, transceiver 306, and memory 308, coupled together.

Processor 302 coordinates operations of computing device 300. In various embodiments, processor 302 includes any hardware configured to process data and execute software applications. The processor 302 can be any technically feasible processing device configured to process data and execute program instructions. For example, processor 302 could include one or more CPUs, DSPs, GPUs, ASICs, FPGAs, microprocessors, microcontrollers, other types of processing units, and/or a combination of different processing units. Processor 302 can include an RTC (not shown) according to which processor 302 maintains an estimate of the current time. The estimate of the current time can be expressed in UTC, although any other standard of time measurement can also be used.

I/O devices 304 include devices configured to receive input, devices configured to provide output, and devices configured to both receive input and provide output. Transceiver 306 is configured to transmit instructions to and/or receive metrology data from other devices, such as metering devices 200 or devices associated with users of a utility commodity.

Memory 308 includes one or more software applications 310 and a data store 312, coupled together. As shown, the one or more software applications 310 include detection application 314. In some embodiments, detection application 314 is used to implement detection application 112 of FIG. 1. When executed by processor 302, detection application 314 can perform any of the utility commodity detection functionality described herein. For example, detection application 314 interfaces with transceiver 306 to receive metrology data indicative of the consumption of one or more utility commodities from one or more metering devices 200. In some embodiments, detection application 314 stores the received metrology data in data store 312 as metrology data 316.

Furthermore, detection application 314 can determine whether a location of one or more metering devices 200 is occupied based on the metrology data received from one or more metering devices 200. In some embodiments, using a detection algorithm and/or one or more detection parameters 318 stored in the data store 312, detection application 314 determines whether the location is occupied based on the metrology data indicative of consumption of one or more utility commodities at the location. Detection parameters 318 can include one or more thresholds or other parameters associated with consumption of one or more utility commodities when a location is occupied and when a location is unoccupied. In some embodiments, detection parameters 318 include detection parameters 222 stored in respective data stores 216 of metering devices 200. In some embodiments, detection parameters 318 include additional detection parameters.

In one example, detection application 314 determines that a location is occupied when consumption of a plurality of utility commodities exceed respective thresholds included in detection parameters 318. As another example, detection application 314 determines that a location is unoccupied when consumption of a plurality of utility commodities is less than respective thresholds included in detection parameters 318. In some examples, detection application 314 determines that the location is unoccupied when, within the same period of time, consumption of one or more utility commodities (e.g., water, gas, and electricity) is less than respective thresholds included in detection parameters 318. In some examples, detection application 314 determines that the location is occupied when, within the same period of time, consumption of one or more utility commodities (e.g., water, gas, and electricity) is less than respective thresholds included in detection parameters 318. In one example, detection application 314 determines that a location is unoccupied by comparing an amount of the consumption of a first utility commodity during a time period to a detection threshold for the first utility commodity and comparing an amount of the consumption of a second utility commodity during the time period to a detection threshold for the second utility commodity. In such an example, detection application 314 determines that the location is unoccupied when at least the amount of consumption of the second utility commodity is less than the detection threshold for the second utility commodity.

As is described in further detail below with respect to FIGs. 4, 7, 8, and 10, detection parameters 318 associated with consumption of one or more utility commodities when a location is occupied and when a location is unoccupied can be determined manually or using a machine learning model, such as machine learning model 320 included in memory 308. For example, machine learning model 320 analyzes metrology data indicative of the consumption of one or more utility commodities over time to determine and update detection parameters 318 associated with consumption of the one or more utility commodities when the location is occupied and when the location is unoccupied. In some embodiments, detection application 314 uses machine learning model 320 to analyze metrology data indicative of consumption of one or more utility commodities and, based on the metrology data, determine whether the location is occupied. For example, detection application 314 provides metrology data indicative of the consumption of one or more utility commodities to machine learning model 320 as an input and machine learning model 320 determines and outputs whether the location is occupied.

In addition, detection application 314 can determine whether consumption of a utility commodity is atypical based on the metrology data received from one or more metering devices 200. In some embodiments, using a detection algorithm and/or one or more detection parameters 318 stored in the data store 312, detection application 314 determines whether the consumption of a utility commodity is atypical based on the metrology data indicative of consumption of one or more utility commodities. Detection parameters 318 further include one or more thresholds or other parameters associated with atypical consumption of a utility commodity.

In one example, detection application 314 determines that consumption of a utility commodity is atypical when an amount of consumption of a first utility commodity exceeds a threshold included in detection parameters 318. As another example, detection application 314 determines that consumption of a utility commodity is atypical by comparing an amount of the consumption of the utility commodity during a time period to a detection threshold that is associated with atypical consumption of the utility commodity and included in the detection parameters 318. As another example, detection application 314 determines that consumption of a utility commodity is atypical when the utility commodity is constantly consumed for a period of time that exceeds a threshold included in detection parameters 318. As another example, detection application 314 determines, using detection parameters 318, that consumption of a utility commodity is atypical when a combination of the amount and time of consumption of the first utility commodity diverges from a regular or expected pattern of consumption of the first utility commodity. As yet another example, detection application 314 determines, using detection parameters 318, that consumption of a utility commodity is atypical when a significant amount of the utility commodity is consumed while the location is unoccupied. As yet another example, detection application 314 determines, using detections parameters 318, that consumption of a first utility commodity is atypical when consumption of the first utility commodity exceeds a threshold included detection parameters 318 during the same period for which minimal amounts of one or more other utility commodities are consumed.

As is described in further detail below, detection parameters 318 associated with atypical consumption of one or more utility commodities can be determined manually or using a machine learning model, such as machine learning model 320 included in memory 308. For example, machine learning model 320 analyzes metrology data indicative of the consumption of one or more utility commodities over time to determine and update detection parameters 318 associated with atypical consumption of one or more utility commodities. In some embodiments, detection application 314 uses machine learning model 320 to analyze metrology data indicative of consumption of one or more utility commodities and determine whether consumption of one or more of the utility commodities is atypical. For example, detection application 314 provides metrology data indicative of the consumption of one or more utility commodities to machine learning model 320 as an input and machine learning model 320 determines and outputs whether the consumption of one or more of the utility commodities is atypical.

In some embodiments, computing device 300 is a metering device, such as metering device 200. In such embodiments, computing device 300 can perform any of the utility commodity metering described herein and implements any of first metering device 102, second metering device 104, or computing device 106 of FIG. 1. For example, in such embodiments, the one or more software applications 310 additionally include a metering application, such as metering application 218 described above. Additionally, in such embodiments, computing device 300 includes a meter, such as meter 210, and a shut-off, such as shut-off 212 described above.

In some embodiments, machine learning model 320 is not stored in memory 308 of the computing device 300 that executes detection application 314 to determine whether a location is unoccupied and/or determine whether consumption of a utility commodity is atypical. Instead, in such embodiments, machine learning model 320 is implemented on a different computing device 300. That is, in some embodiments, a computing device 300 that executes detection application 314 is different than a computing device 300 that trains machine learning model 320. In some embodiments, a computing device 300 that trains machine learning model 320 transmits machine learning model information, which can include detection parameters 318, to the computing device 300 executing detection application 314. In some embodiments, the computing device 300 that implements machine learning model 320 also transmits machine learning model information, which include detection parameters 318, to metering device 200. In such embodiments, metering device 200 stores the received machine learning model information in data store 216 as detection parameters 222.

### Training Detection Algorithm

FIG. 4 is a flow diagram of method steps for training an algorithm for detecting when a location is unoccupied and/or when consumption of a utility commodity at a location is atypical, according to various embodiments. Although many of the method steps for training the algorithm are described as being performed by machine learning model 320, which is stored in memory 308 of computing device 300, persons skilled in the art will understand that any system configured to perform the method steps, in any order, falls within the scope of the various embodiments. For example, the method steps for training the algorithm can be performed by a first computing device 300 that is different than a second computing device 300 that uses the detection algorithm to detect when a location is unoccupied and/or when consumption of a utility commodity at a location is atypical.

As shown, a method 400 begins at step 402 where computing device 300 receives metrology data indicative of the consumption of a plurality of utility commodities. The metrology data received at step 402 includes information associated with respective amounts of the plurality of utility commodities that were consumed, respective durations for which the plurality of commodities were consumed, and/or respective time periods during which the plurality of utility commodities were consumed. In addition, the metrology data received at step 402 indicates whether the location was occupied or unoccupied during consumption of the plurality of utility commodities. In some embodiments, information associated with the occupancy status of the location during consumption of the plurality of utility commodities is provided manually by a user associated with the location and/or is provided via another source such as location tracking on a device associated with the user (e.g., the user's mobile phone).

In some instances, metrology data indicative of normal consumption of utility commodities is received by computing device 300 at step 402. Normal consumption of a utility commodity includes consumption of a utility commodity that is intended and/or aligns with regular patterns of consumption of the utility commodity that are specific to the location at which the utility commodity is consumed, which may be depend in part on the geographic location and how utility commodities are used at the location. Thus, what is considered normal consumption of a utility commodity at one location might not be considered normal consumption of a utility commodity at another location. For example, normal consumption of gas for a location in a cold climate that requires gas for heating would be different than normal consumption of gas for a location in a warm climate. Furthermore, normal consumption of a utility commodity at a location can be dependent on both an amount of consumption of the utility commodity and a time of day at which the utility commodity is consumed. For example, an amount of electricity consumption that is considered normal at a first time of day when a location is typically unoccupied (e.g., mid-day) would be less than an amount of electricity consumption that is considered normal at a second time of day at which the same location is occupied (e.g., in the evening) and many devices additional devices at the location are consuming power. Further, not all locations have the same utility commodity consumption levels, so normal consumption at a first location may be atypical at another location. For example, two electric vehicles may be charged in the evening by rapid chargers at a first location whereas no electric vehicles are charged at a second location.

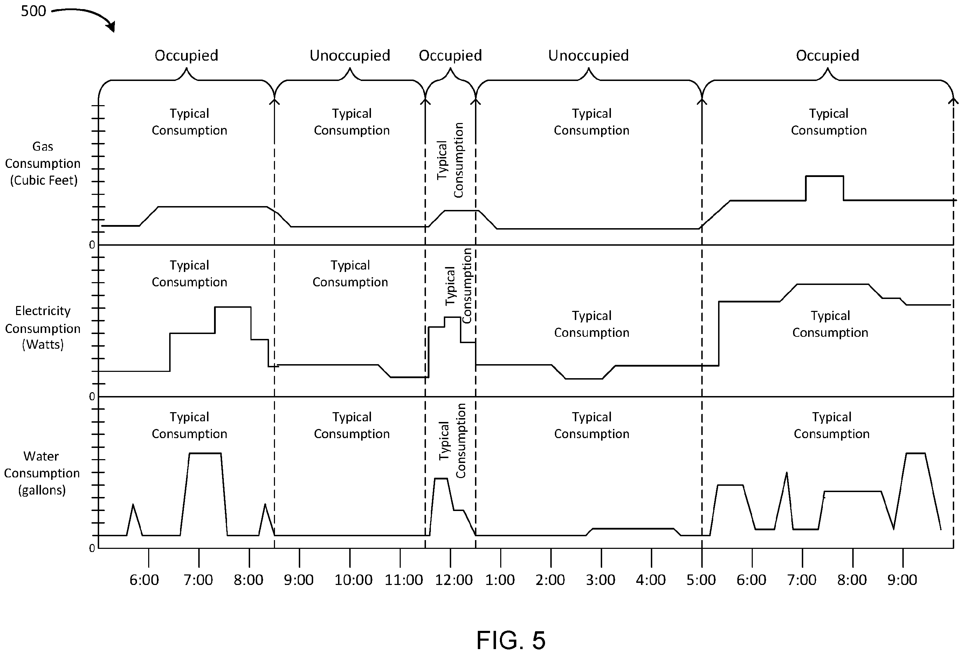

FIG. 5 illustrates sample metrology data 500 that is indicative of normal consumption of the plurality of utility commodities when the location is occupied and when the location unoccupied, according to various embodiments. Normal consumption of the plurality of utility commodities refers to typical, or expected, consumption of the plurality of utility commodities. Persons skilled in the art will understand that sample metrology data 500 is just one non-limiting example of metrology data that can be received by computing device 300 at step 402. As shown in FIG. 5, sample metrology data 500 is indicative of the consumption of a plurality of utility commodities, such as water, electricity, and gas, over the course of multiple hours. Sample metrology data 500 is indicative of respective amounts of the utility commodities that were consumed, respective durations for which the utility commodities were consumed, and time periods during which the utility commodities were consumed. In addition, sample metrology data 500 includes occupancy data that indicates whether the location was occupied or unoccupied during consumption of the plurality of utility commodities. For example, sample metrology data 500 indicates that the location was unoccupied between 8:30 and 11:30 and indicates that the location was occupied between 11:30 and 12:30. In some embodiments, the occupancy data is added to sample metrology data 500 by a user associated with the location before the sample metrology data 500 is received by machine learning model 320 and/or used to train the detection algorithm.

Sample metrology data 500 is considered to be indicative of normal, or typical, consumption of the plurality of utility commodities for various example reasons. First, as shown in FIG. 5, respective amounts of water, electricity, and gas that are consumed generally increase and decrease during the same time periods. For example, larger amounts of water, electricity, and gas are respectively consumed during the time period before 8:30 and minimal amounts of water, electricity, and gas are respectively consumed during the time period between 8:30 and 11:30. In addition, sample metrology data 500 does not include any periods of time during which large amounts of a first utility commodity, such as water, were consumed while minimal amounts of the other utility commodities were consumed.

In some embodiments, the metrology data received at step 402 further includes training labels to indicate whether consumption of a utility commodity was typical or atypical during a time period. As shown, sample metrology data 500 includes respective training labels to indicate that the consumption of the plurality utility commodities is typical, or expected, during periods in which the location is occupied and unoccupied. For example, training labels indicate that the consumption of water, gas, and electricity is typical during the period before 8:30 for which the location is occupied. As another example, training labels indicative that the consumption of water, gas, and electricity is typical during the period between 8:30 and 11:30 for which the location is unoccupied. In some embodiments, the metrology data includes only a single training label for the entire data set. In such embodiments, sample metrology data 500 would only include a single training label to indicate that consumption of the plurality of utility commodities was typical.

Referring back to FIG. 4, in some instances, metrology data indicative of atypical consumption of one or more utility commodities is received by computing device at step 402. Atypical consumption of a utility commodity includes consumption of a utility commodity that diverges from regular patterns of consumption of the utility commodity. In some examples, consumption of a first utility commodity can be considered atypical when the amount of the first utility commodity that is consumed exceeds normal levels of consumption during the same time period at which minimal amounts of second and/or third utility commodities are consumed. In some examples, consumption of a utility commodity diverges from regular patterns of consumption of the utility commodity when consumption of the utility commodity is unintended or undesired. In one particular example, atypical consumption of water might include constant consumption of a large amount of water caused by a running faucet or leaking pipe during a time period in which minimal amounts of water are typically consumed. In another particular example, atypical consumption of gas might include constant consumption of large amounts of gas caused by an unignited stove burner that was left on or a leaking gas pipe during a time period in which minimal amounts of gas are typically consumed. However, similar to what is considered to be normal consumption of a utility commodity can differ by location, what is considered to be atypical consumption of a utility commodity can also differ by location. For example, gas leaking from an unignited stove burner that was left on can result in consumption of an amount of gas that is considered atypical for a first location. However, this amount of gas consumption that is considered atypical for the first location might not be considered atypical for a second location in a cold climate that consumes large amounts of gas for heating.

FIG. 6 illustrates sample metrology data 600 that is indicative of atypical consumption of a utility commodity when a location is unoccupied, according to various embodiments. In particular, sample metrology data 600 is indicative of atypical consumption of water when the location is unoccupied during the time period from 1:00-5:00. The consumption of water indicated by sample metrology data 600 is considered to be atypical for various example reasons. First, as shown in FIG. 6, a relatively large amount of water is consumed during the same time period (e.g., 1:00-5:00) at which minimal amounts of electricity and gas are consumed. In addition, the amount of water consumed and the duration for which the water is consumed between 1:00 and 5:00 diverges from a regular or expected pattern of consumption of water during that same time period. For example, when compared to the typical consumption of water during the period from 1:00- 5:00 that is indicated in sample metrology data 500, a greater amount of water is consumed at a constant rate during the period from 1:00-5:00 in sample metrology data 600. Such an example of atypical water consumption could be caused by a running faucet that was left on or a water pipe that has burst. Persons skilled in the art will understand that sample metrology data 600 is just one non-limiting example of metrology data that is indicative of typical and atypical consumption of a utility commodity at a location.

As described above, in some embodiments, the metrology data received at step 402 further includes training labels to indicate whether consumption of a utility commodity was typical or atypical during a time period. As shown, sample metrology data 600 includes respective training labels to indicate that the consumption of the plurality utility commodities is typical during some periods and atypical during other periods. For example, sample metrology data 600 includes training labels indicate that the consumption of water is typical, or expected, during the period before 8:30 for which the location is occupied, during the period between 8:30-11:30 for which the location is unoccupied, and during the period from 11:30-12:30 for which the location is occupied. Furthermore, sample metrology data 600 includes a training label that indicates consumption of water is atypical, during the period from 1:00-5:00. In some embodiments, the metrology data includes only a single training label for the entire data set. In such embodiments, sample metrology data 600 would only include a single training label to indicate that consumption of the plurality of utility commodities was atypical.

Referring back to FIG. 4, at step 404, the machine learning model 320 identifies periods in the metrology data (e.g., the metrology data received at step 402) of minimal consumption of the plurality of utility commodities. The machine learning model 320 uses detection parameters, such as detection parameters 318, to determine whether a particular time period is a period of minimal consumption of the plurality of utility commodities. For example, the machine learning model 320 compares the consumption of the plurality of utility commodities to one or more respective thresholds included in detection parameters 318. In some instances, the machine learning model 320 determines that a period in the metrology data is a period of minimal consumption when, during the period, at least consumption of a first utility commodity is less than a first threshold included in detection parameters 318 and consumption of a second utility commodity is less than a second threshold included in detection parameters 318. In some instances, the machine learning model 320 determines that a period in the metrology data is a period of minimal consumption when, during the period, consumption of a first utility commodity is less than a first threshold included in detection parameters 318, consumption of a second utility commodity is less than a second threshold included in detection parameters 318, and consumption of a third utility commodity is less than a third threshold included in detection parameters 318. With respect to the illustrated example of FIG. 5, machine learning model 320 might identify the period from 8:30-11:30 and the period from 12:30-5:00 in sample metrology data 500 as periods of minimal consumption because respective amounts of consumption of water, gas, and electricity are less than respective thresholds included in detection parameters 318 during those periods.

At step 406, machine learning model 320 predicts the location as unoccupied during identified periods of minimal consumption of the plurality of utility commodities. Continuing with the above example in view of sample metrology data 500, the machine learning model 320 would predict the location as being unoccupied during the period from 8:30-11:30 and during the period from 12:30-5:00. Persons skilled in the art will understand that machine learning model 320 does not reference the occupancy information included in the metrology data at step 406 when predicting the location as unoccupied during identified periods of minimal consumption. Rather, as will be discussed in more detail below, the occupancy data is used by machine learning model 320 to verify accuracy of the unoccupancy prediction that is made at step 406.

At step 408, machine learning model 320 determines, based on the occupancy information included in the metrology data received at step 402, whether the location was actually unoccupied during the identified periods of minimal consumption for which the location was predicted as unoccupied at step 406. Continuing with the above example in view of sample metrology data 500, the machine learning model 320 would determine whether the location was actually unoccupied during the period from 8:30-11:30 and during the period from 12:30-5:00 based on the occupancy data included in sample metrology data 500.

If the location was actually unoccupied during the identified periods of minimal consumption (408 - Yes), then method 400 proceeds to step 410 at which machine learning model 320 updates detection parameters 318 in view of the accurate occupancy prediction. Updating detection parameters 318 can include (without limitation) adjusting one or more weights of machine learning model 320 and/or one or thresholds associated with respective amounts and durations of consumption of the plurality of utility commodities based on the accurate occupancy prediction. Updating detection parameters 318 can also include updating respective regular patterns of consumption of the utility commodities when the location is unoccupied. Continuing with the above example in view of sample metrology data 500, the occupancy data included in sample metrology data 500 indicates that the location was actually unoccupied during the period from 8:30-11:30 and during the period from 12:30-5:00. Thus, at step 410, machine learning model 320 updates parameters 318 based on the accurate prediction that the location was unoccupied during the period from 8:30-11:30 and during the period from 12:30-5:00.

If the location was actually occupied during the identified periods of minimal consumption (408 - No), then method 400 proceeds to step 412 at which machine learning model 320 updates detection parameters 318 in view of the inaccurate occupancy prediction. Updating detection parameters 318 can include adjusting one or more weights of machine learning model 320 and/or one or more thresholds associated with respective amounts and durations of consumption of the plurality of utility commodities based on the inaccurate occupancy prediction. Updating detection parameters 318 can also include updating respective regular patterns of consumption of the utility commodities when the location is occupied. As an example, with respect to the illustrated example of FIG. 5, if machine learning model 320 identified the period from 11:30-12:30 in sample metrology data 500 as a period of minimal consumption at step 404 and subsequently predicted the location as unoccupied from 11:30-12:30 at step 406, the machine learning model 320 would determine, at step 408, that the location actually was occupied during the period from 11:30-12:30 based on the occupancy data included sample metrology data 500. Accordingly, in this example, method 400 proceeds to step 412 at which machine learning model 320 updates detection parameters 318 in view of the inaccurate occupancy prediction.

After the detection parameters 318 are updated in view of the accuracy of the occupancy prediction at one of step 410 or step 412, method 400 proceeds to step 414. At step 414, machine learning model 320 identifies periods in the metrology data of atypical consumption of a utility commodity of the plurality of utility commodities. The machine learning model 320 uses detection parameters, such as detection parameters 318, to determine whether a period in the metrology data is a period of atypical consumption of a utility commodity. For example, the machine learning model 320 compares the consumption of a utility commodity to one or more respective thresholds associated with atypical consumption of the utility commodity that are included in detection parameters 318. In some instances, the machine learning model 320 determines that a period in the metrology data is a period of atypical consumption of a utility commodity when, during the period, consumption of the utility commodity exceeds a threshold that is indicative of atypical consumption of the utility commodity during that period. In other instances, the machine learning model 320 determines that a period in the metrology data is a period of atypical consumption of a utility commodity when, during the period, consumption of the utility commodity exceeds a threshold and consumption of second and/or third utility commodities is less than respective thresholds. With respect to the illustrated example of FIG. 6, machine learning model 320 might identify the period from 1:00-5:00 in sample metrology data 600 as a period of atypical consumption of water because the amount of water consumed during the period from 1:00-5:00 exceeds one or more thresholds in detection parameters 318 that are indicative of atypical consumption of water during the period from 1:00-5:00. In addition, in sample metrology data 600, the amounts of gas and electricity consumed during the period from 1:00-5:00 is less than respective thresholds included in detection parameters 318.

At step 416, machine learning model 320 predicts the consumption of the utility commodity as atypical during the identified period(s) of atypical consumption of the utility commodity. Continuing with the above example in view of sample metrology data 600, the machine learning model 320 would predict the consumption of water during the period from 1:00-5:00 as atypical. At step 418, the machine learning model 320 determines whether the consumption of the utility commodity that was predicted as atypical actually was atypical. In some embodiments, machine learning model 320 prompts, by using I/O devices 304 of computing device 300 or by transmitting a message to a device of a user associated with the location, a user to confirm whether the utility commodity consumption predicted as atypical actually was atypical. In some embodiments, the metrology data received at step 402 further includes training labels to indicate whether consumption of a utility commodity was typical or atypical during a time period. For example, metrology data 600 includes a label that indicates consumption of water was atypical during the period from 1:00-5:00. In such embodiments, machine learning model 320 determines, based on the presence of an atypical consumption training label included in the metrology data received at step 402, whether the utility commodity consumption predicted as atypical actually was atypical during the identified period.

If a training label included in the metrology data indicates that consumption of the utility commodity actually was atypical (418 - Yes), then method 400 proceeds to step 420 at which machine learning model 320 updates detection parameters 318 in view of the accurate atypical consumption prediction. Updating detection parameters 318 can include (without limitation) adjusting one or more weights of machine learning model 320 and/or one or more thresholds associated with respective amounts of consumption of the utility commodity, durations for which the utility commodity was consumed, and/or time periods at which the utility commodity was consumed based on the accurate prediction. Updating detection parameters 318 can also include updating a regular pattern of consumption of the utility commodity based on the accurate prediction.

If there is no training label included in the metrology data that indicates the predicted atypical consumption of the utility commodity actually was atypical (418 - No), then method 400 proceeds to step 422 at which machine learning model 320 updates detection parameters 318 in view of the inaccurate atypical consumption prediction. Updating detection parameters 318 can include (without limitation) adjusting one or more weights of machine learning model 320 and/or one or more thresholds associated with respective amounts of consumption of the utility commodity, durations for which the utility commodity was consumed, and/or time periods at which the utility commodity was consumed based on the inaccurate prediction. Updating detection parameters 318 can also include updating a regular pattern of consumption of the utility commodity based on the inaccurate prediction.

After the detection parameters 318 are updated in view of the accuracy of the atypical consumption prediction at one of step 420 or step 422, method 400 proceeds to step 424. At step 424, machine learning model 320 distributes detection model information to one or computing devices, such as metering devices 200 and/or computing devices 300. In some embodiments, distributing detection model information includes distributing detection parameters 318 to one or more metering devices 200 and/or one or more computing devices 300. In such embodiments, the one or more metering devices 200 store the detection parameters 318 in data store 216 as detection parameters 222, which can be used by metering application 218 to detect atypical consumption of a utility commodity. Furthermore, in such embodiments, the one or more computing devices 300 store the detection parameters 318 in data store 312 for use by detection application 314 to detect when a location is unoccupied and/or when consumption of a utility commodity is atypical based on metrology data indicative of the consumption of one or more utility commodities. In some embodiments, distributing detection model information includes distributing a detection algorithm to one or more metering devices 200 and/or one or more computing devices 300. In such embodiments, the detection algorithm is used, for example by detection application 314, to detect when a location is unoccupied and/or when consumption of a utility commodity is atypical. In other embodiments, distributing detection model information includes transmitting a machine learning model, such as machine learning model 320, to one or more computing devices. Is such embodiments, the one or more computing devices 300 implement the machine learning model to determine whether a location is occupied and/or whether consumption of a utility commodity is atypical. For example, in such embodiments, detection application 314 provides metrology data indicative of the consumption of one or more utility commodities to machine learning model 320 as an input and machine learning model 320 determines and outputs whether the location is occupied and/or whether consumption of a utility commodity is atypical.

After distributing the detection model information to one or more computing devices at step 424, method 400 proceeds back to step 402 at which machine learning model 320 receives new metrology data for training the detection algorithm. In some embodiments, method 400 is repeated over the course of days, weeks, or even months before the one or more computing devices use the distributed detection model information to detect when a location is unoccupied and/or when consumption of a utility commodity is atypical. In some embodiments, method 400 is continuously performed as metering devices 200 generate new metrology data indicative of the consumption of one or more utility commodities. In such embodiments, the detection parameters 318 are continuously updated.

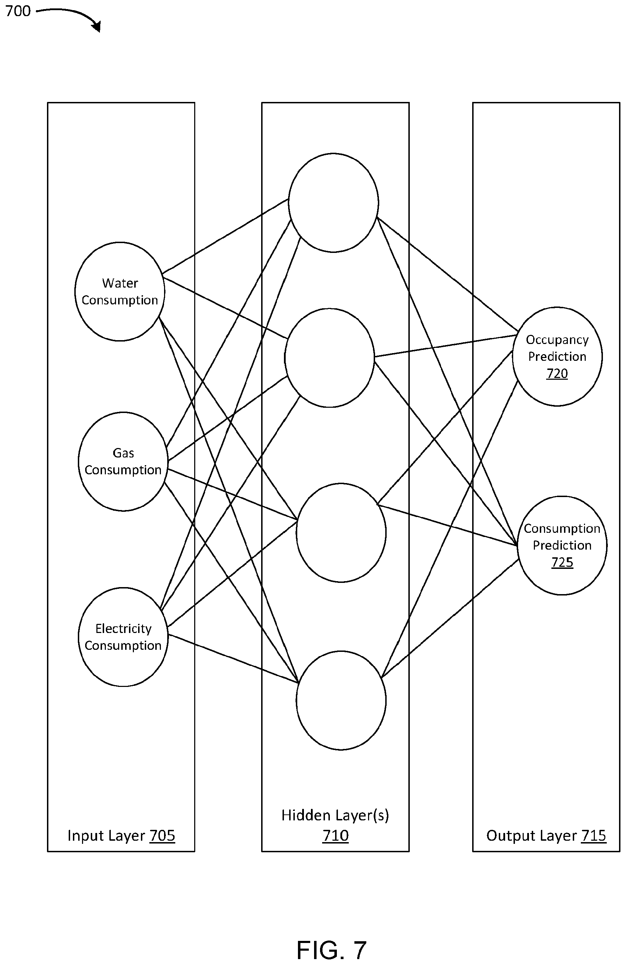

FIG. 7 illustrates an example machine learning model 700 that can be used for detecting when a location is unoccupied and/or when consumption of a utility commodity is atypical, according to various embodiments. As shown, the machine learning model 700 is a neural network that includes, without limitation, an input layer 705, one or more hidden layers 710, and an output layer 715. In some embodiments, machine learning model 700 is used to implement machine learning model 320. In some embodiments, machine learning model 700 is trained by computing device 300 using method 400 to detect when a location is unoccupied and/or when consumption of utility commodity is atypical.

In some embodiments, machine learning model 700 is trained by computing device 300 and method 400 to detect, based on metrology data received from metering devices 200 that has been labeled to indicate when the corresponding location is occupied or not occupied and when typical and atypical consumption of a utility commodity is being consumed. In such embodiments, input layer 705 receives metrology data indicative of the consumption of a plurality of utility commodities, such as water, gas, and electricity. The one or more hidden layers 710 analyze, based on detection parameters 318 and/or other detection model information, the metrology data to determine whether the location is occupied and/or whether consumption of one or more of the utility commodities is atypical. Furthermore, in such embodiments, output layer 715 outputs a first prediction 720 regarding the occupancy of the location and/or a second prediction 725 regarding atypical consumption of one or more utility commodities. That is, based on the analysis performed by one or more hidden layers 710, output layer 715 predicts whether the location is occupied and/or predicts whether consumption of one or more of the utility commodities is atypical.

FIG. 8 illustrates another example machine learning model 800 that can be used for detecting when a location is unoccupied and/or when consumption of a utility commodity is atypical, according to various embodiments. As shown, the machine learning model 800 is a random forest that includes, without limitation, an input layer 805, one or more decision trees 810, a determination block 815, and an output layer 820. In some embodiments, machine learning model 800 is used to implement machine learning model 320. In some embodiments, machine learning model 800 is trained by computing device 300 using method 400 to detect when a location is unoccupied and/or when consumption of utility commodity is atypical.

In some embodiments, machine learning model 800 is trained by computing device 300 and method 400 to detect, based on metrology data received from metering devices 200 that has been labeled to indicate when the corresponding location is occupied or not occupied and when typical and atypical consumption of a utility commodity is being consumed. In such embodiments, input layer 805 receives metrology data indicative of the consumption of a plurality of utility commodities, such as water, gas, and electricity. The one or more decision trees 810 analyze, based on detection parameters 318 and/or other detection model information, respective portions of the metrology data to determine whether the location is occupied and/or whether consumption of one or more of the utility commodities is atypical.

For example, first decision tree 810-1 analyzes portions of the metrology data to determine whether the location is unoccupied during consumption of the plurality of utility commodities. Analyzing portions of the metrology data can include comparing amounts consumption of the plurality of utility commodities to respective thresholds (e.g., minimum thresholds) associated with consumption of the plurality of utility commodities when the location is unoccupied. As another example, second decision tree 810-2 analyzes portions of the metrology data to determine whether consumption of a utility commodity is atypical, or unexpected. Analyzing portions of the metrology data can include comparing an amount and/or time of consumption of a utility commodity to a pattern of regular, or expected, consumption of the utility commodity. Decision tree 810-1 outputs an occupancy prediction to the determination block 815 and decision tree 810-2 outputs an atypical consumption prediction to determination block 815. In some embodiments, a single decision tree 810 analyzes the metrology data and outputs both the occupancy prediction and the atypical consumption prediction to determination block 815. In some embodiments, more than two decision trees 810 analyze the metrology data and output predictions to determination block 815.

Based on the predictions received from decision trees 810-1 and 810-2, the determination block 815 makes a final prediction regarding occupancy of the location and regarding atypical consumption of one or more utility commodities. That is, based on the analysis performed by one or more decision trees 810, determination block 815 predicts whether the location is occupied and/or predicts whether consumption of one or more of the utility commodities is atypical. Determination block 815 provides the final prediction to output layer 820, which outputs a first prediction 825 regarding the occupancy of the location and/or a second prediction 830 regarding atypical consumption of one or more utility commodities.

Persons skilled in the art will understand that machine learning models 700 and 800 are just two non-limiting examples of machine learning models that can be used to implement machine learning model 320. Moreover, it should be understood that in some embodiments, other types of machine learning models are used to implement machine learning model 320.

### Detection of Unintended Utility Commodity Consumption

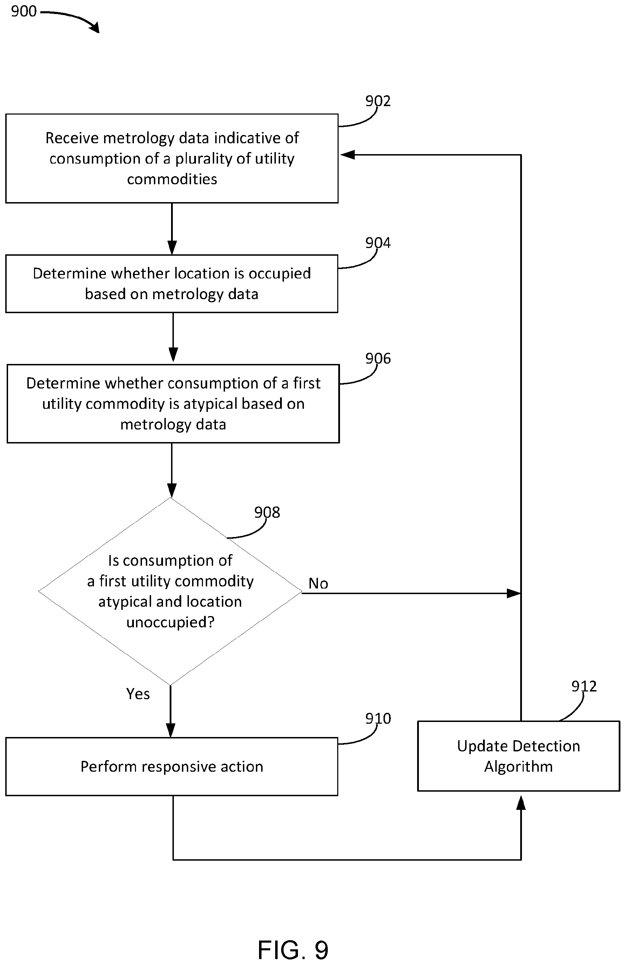

FIG. 9 is a flow diagram of method steps for detecting atypical consumption of a utility commodity at an unoccupied property, according to various embodiments. Although the method steps of FIG. 9 are described as being performed by computing device 300 using detection application 314, the method steps of FIG. 9 can also be performed, for example, by metering device 102, metering device 104, computing device 106, or metering device 200 as described above with respect to FIGs. 1-8. Furthermore, although the method steps are shown in an order, persons skilled in the art will understand that some method steps may be performed in a different order, repeated, and/or performed by components other than those described in FIG. 9.

As shown, a method 900 begins at step 902, where detection application 314 receives metrology data indicative of the consumption of a plurality of utility commodities. In some embodiments, the plurality of utility commodities includes at least two different utility commodities. For example, detection application 314 receives metrology data indicative of consumption of a first utility commodity (e.g., water) from a first metering device 200 and receives metrology data indicative of consumption of a second utility commodity (e.g., electricity) from a second metering device 200. In some embodiments, the plurality of utility commodities includes at least three different utility commodities. For example, detection application 314 receives metrology data indicative of a first utility commodity (e.g., water) from a first metering device 200, receives metrology data indicative of consumption of a second utility commodity (e.g., electricity) from a second metering device 200, and receives metrology data indicative of consumption of a third utility commodity (e.g., gas) from a third metering device 200.

At step 904, detection application 314, determines whether the location at which the plurality of utility commodities were consumed is occupied based on the metrology data indicative of the consumption of the plurality of utility commodities. In some embodiments, detection application 314 determines whether the location is occupied based on the metrology data. In such embodiments, detection application 314 uses detection parameters 318 to determine whether the location is occupied based on the metrology data. For example, in some instances, detection application 314 determines that the location is occupied when consumption of the plurality of utility commodities exceeds one or more respective thresholds included in detection parameters 318 within the same period of time. As another example, in some instances, detection application 314 determines that the location is unoccupied when consumption of the plurality of utility commodities is less than one or more respective thresholds included in detection parameters 318 within the same period of time. In one example, detection application 314 determines whether a location is occupied by comparing an amount of the consumption of a first utility commodity of the plurality of utility commodities during a time period to a detection threshold for the first utility commodity and comparing an amount of the consumption of a second utility commodity during the time period to a detection threshold for the second utility commodity. In such an example, detection application 314 determines that the location is unoccupied when at least the amount of consumption of the second utility commodity is less than the detection threshold for the second utility commodity.

In some embodiments, detection application 314 uses machine learning model 320, 700, and/or 800 to determine whether the location is occupied based on the metrology data. In such embodiments, detection application 314 provides metrology data indicative of the consumption of the plurality of utility commodities to machine learning model 320, 700, and/or 800 as an input and machine learning model 320, 700, and/or 800 outputs an occupancy status of the location.

At step 906, detection application 314, determines whether consumption of a first utility commodity, such as water or gas, of the plurality of utility commodities is atypical based on the metrology data indicative of the consumption of the plurality of utility commodities. In some embodiments, detection application 314 determines whether consumption of a first utility commodity was atypical based on the metrology data. In such embodiments, detection application 314 uses detection parameters 318 to determine whether consumption of the first utility commodity was atypical based on the metrology data. For example, in some instances, detection application 314 determines that consumption of the first utility commodity was atypical when an amount of consumption of the first utility commodity exceeds a threshold included in detection parameters 318, when an amount of the consumption of the first utility commodity during a time period exceeds a detection threshold included in detection parameters 318 and associated with atypical consumption of the first utility commodity, when an amount of consumption of the first utility commodity and a time at which the first utility commodity was consumed diverges from a regular or expected pattern of consumption of the first utility commodity, when the first utility commodity is constantly consumed for a duration that exceeds a threshold included in detection parameters 318, and/or when consumption of the first utility commodity exceeds a threshold included in detection parameters 318 during the same period in which consumption of second and/or third utility commodities of the plurality of utility commodities is less than respective thresholds included in detection parameters 318. In some instances, one or more of the detection parameters 318 used for determining whether consumption of the first utility commodity is atypical are different than detection parameters used for determining whether the location is occupied.

In some embodiments, detection application 314 uses machine learning model 320, 700, and/or 800 to determine whether consumption of a first utility commodity is atypical based on the metrology data indicative of the consumption of the plurality of utility commodities. In such embodiments, detection application 314 provides metrology data to machine learning model 320, 700, and/or 800 as an input and machine learning model 320, 700, and/or 800 outputs an indication as to whether consumption of the first utility commodity was atypical.

At step 908, detection application 314 determines whether both the location was determined to be unoccupied at step 904 and consumption of the first utility commodity was determined to be atypical at step 906. If at least one of the location was determined to be occupied at step 904 or consumption of the first utility commodity was not determined to be atypical at step 906 (908 - No), then method 900 returns to step 902 at which computing device 300 receives new metrology data indicative of the consumption of one or more utility commodities and repeats method 900.

If the location was determined to be unoccupied at step 904 and consumption of the first utility commodity was determined to be atypical at step 906 (908 - Yes), then method 900 proceeds to step 910 at which computing device 300 performs a responsive action. In some embodiments, performing the responsive action can include transmitting a notification, such as a text message or e-mail, to a device of a user associated with the location (e.g., a home owner). The notification includes an indication that atypical consumption of the first utility commodity is occurring while the location is unoccupied. In such embodiments, the notification can further include a prompt for the user to confirm whether the location is unoccupied and/or the detected atypical consumption of the first utility commodity is intended. In some embodiments, performing the responsive action includes shutting off supply of the first utility commodity. For example, detection application 318 sends instructions to the metering device 200 that is metering consumption of the first utility commodity to shut off, via a shut-off 212 included in or coupled to the metering device 200, supply of the first utility commodity to the location. In some embodiments, detection application 314, using the shut-off 212 included in or coupled to the metering device 200, automatically shuts off supply of the first utility commodity to the location in response to determining that the location is unoccupied and consumption of the first utility commodity is atypical. In other embodiments, detection application 314, using the shut-off 212 included in or coupled to the metering device 200, shuts off supply of the first utility commodity to the location after a user confirms that the atypical consumption of the first utility commodity is unintended.

At step 912, detection application 314 updates the detection algorithm. When performing the responsive action at step 910 includes prompting a user to confirm whether consumption of the first utility commodity was atypical when the location was unoccupied, detection application 314 updates the detection algorithm based on feedback received from the user. Feedback from the user can include an indication as to whether consumption of the first utility commodity actually was atypical, whether the location actually was unoccupied, and/or whether consumption of the first utility commodity was atypical while the location was unoccupied.

Updating the detection algorithm can include adjusting one or more weights of machine learning model 320, 700, and/or 800 and/or adjusting detection parameters 318. Adjusting detection parameters 318 includes, for example, updating one or more thresholds associated with respective amounts and durations of consumption of the plurality of utility commodities based on the detected atypical consumption of the first utility commodity when the location is unoccupied. Updating the detection algorithm can also include updating respective regular patterns of consumption of the utility commodities when the location is occupied and unoccupied. Furthermore, updating the detection algorithm can include distributing the updated detection parameters 318 to one or more metering devices 200 and/or other computing devices 300. After computing device 300 updates the detection algorithm, method 900 returns to step 902 at which detection application 314 receives new metrology data indicative of the consumption of one or more utility commodities and repeats method 900.

FIG. 10 is another flow diagram of method steps for detecting atypical consumption of a utility commodity at an unoccupied property, according to various other embodiments. Although the method steps of FIG. 10 are described as being performed by multiple metering devices 200 and/or computing device 300, the method steps of FIG. 9 can also be performed, for example, by one or more of metering device 102, metering device 104, computing device 106, metering device 200, and/or computing device 300 described above with respect to FIGs. 1-9. Furthermore, although the method steps are shown in an order, persons skilled in the art will understand that some method steps may be performed in a different order, repeated, and/or performed by components other than those described in FIG. 10.

As shown, a method 1000 begins at step 1002, at which computing device 300 configures metering devices 200 with respective detection parameters, such as detection parameters 222 and/or detection parameters 318. For example, computing device 300 configures a first metering device 200-1 with detection parameters 222-1 associated with consumption of a first utility commodity (e.g., water), configures a second metering device 200-2 with detection parameters 222-2 associated with consumption of a second utility commodity (e.g., electricity), and configures a third metering device 200-3 with detection parameters 222-3 associated with consumption of a third utility commodity (e.g., gas).

At step 1004, first metering device 200-1 monitors consumption of a first utility commodity, such as water, and determines whether consumption of the first utility commodity satisfies one or more detection parameters associated with atypical consumption of the first utility commodity. For example, first metering device 200-1 executes metering application 218-1 to determine whether consumption of the first utility commodity satisfies one or more of the detection parameters, such as detection parameters 222-1 configured at step 1002, that are associated with atypical consumption of the first utility commodity. In some embodiments, consumption of the first utility commodity satisfies one or more of the detection parameters 220-1 at step 1004 when consumption of the first utility commodity exceeds one or more thresholds indicative of atypical consumption of the first utility commodity. For example, consumption of the first utility commodity can satisfy one or more detection parameters 220-1 when an amount of consumption of the first utility commodity exceeds a threshold associated with atypical consumption of the first utility commodity, when an amount of consumption of the first utility commodity and a time at which the first utility commodity was consumed diverges from a regular or expected pattern of consumption of the first utility commodity, and/or when the first utility commodity is constantly consumed for a duration that exceeds a threshold indicative of atypical consumption of the first utility commodity.

If consumption of the first utility commodity does not satisfy one or more detection parameters associated with atypical consumption of the first utility commodity (1004 - No), then method 1000 repeats step 1004 to analyze additional consumption of the first utility commodity. If consumption of the first utility commodity does satisfy one or more detection parameters associated with atypical consumption of the first utility commodity (1004 - Yes), then method 1000 proceeds to step 1006 at which first metering device 200-1 notifies second metering device 200-2 that consumption of the first utility commodity satisfies one or more detection parameters associated with atypical consumption of the first utility commodity. For example, metering application 218-1 executing on first metering device 200-1 transmits, using transceiver 206-1, the notification to second metering device 200-2.

At step 1008, in response to receiving the notification from first metering device 200-1, second metering device 200-2 monitors consumption of a second utility commodity, such as electricity or gas, and determines whether consumption of the second utility commodity satisfies one or more detection parameters, such as detection parameters 222-2 configured at step 1002, that are associated with consumption of the second utility commodity when the location is unoccupied. For example, consumption of the second utility commodity can satisfy one or more detection parameters 222-2 when an amount of consumption of the second utility commodity is less than a threshold for consumption of the second utility commodity when the location is unoccupied. In another example, consumption of the second utility commodity can satisfy one or more detection parameters 222-2 when an amount and a time of consumption of the second utility commodity corresponds to a regular, or expected, pattern of consumption of the second utility commodity when the location is unoccupied.

If consumption of the second utility commodity does not satisfy one or more detection parameters associated with consumption of the second utility commodity when the location is unoccupied (1008 - No), then method 1000 proceeds to step 1010 at which the second metering device 200-2 determines whether to make an exception and flag the location at which the second utility commodity is consumed as unoccupied. Step 1010 will be described in more detail below.

If consumption of the second utility commodity does satisfy one or more detection parameters associated with consumption of the second utility commodity when the location is unoccupied (1008- Yes), then method 1000 proceeds to step 1012 at which second metering device 200-2 notifies third metering device 200-3 that consumption of the first utility commodity satisfies one or more detection parameters associated with atypical consumption of the first utility commodity and that consumption of the second utility commodity satisfies one or more detection parameters associated with consumption of the second utility commodity when the location is unoccupied. For example, metering application 218-2 executing on second metering device 200-2 transmits, using transceiver 206-2, the notification to third metering device 200-3.

At step 1014, in response to receiving the notification from second metering device 200-2, third metering device 200-3 monitors consumption of a third utility commodity, such as electricity or gas, and determines whether consumption of the third utility commodity satisfies one or more detection parameters, such as detection parameters 222-2 configured at step 1002, that are associated with consumption of the third utility commodity when the location is unoccupied. For example, consumption of the third utility commodity can satisfy one or more detection parameters 222-3 when an amount of consumption of the third utility commodity is less than a threshold for consumption of the third utility commodity when the location is unoccupied. In another example, consumption of the third utility commodity can satisfy one or more detection parameters 222-3 when an amount and a time of consumption of the third utility commodity corresponds to a regular, or expected, pattern of consumption of the third utility commodity when the location is unoccupied.

If consumption of the third utility commodity does not satisfy one or more detection parameters that are associated with consumption of the third utility commodity when the location is unoccupied (1014 - No), then method 1000 proceeds to step 1010 at which the third metering device 200-3 determines whether to make an exception and flag the location at which the third utility commodity is consumed as unoccupied. Step 1010 will be described in more detail below.

If consumption of the third utility commodity does satisfy one or more detection parameters that are associated with consumption of the third utility commodity when the location is unoccupied (1014 - Yes), then method 1000 proceeds to step 1016 at which third metering device 200-3 flags the location as unoccupied and performs a responsive action. In some embodiments, performing the responsive action can include transmitting a notification, such as a text message or e-mail, to a device of a user associated with the location (e.g., a home owner). The notification includes an indication that atypical consumption of the first utility commodity is occurring while the location is unoccupied. In such embodiments, the notification can further include a prompt for the user to confirm whether the location is unoccupied and/or the detected atypical consumption of the first utility commodity is intended. In some embodiments, performing the responsive action includes shutting off supply of the first utility commodity. For example, third metering device 200-3 sends instructions to first metering device 200-1 to shut off, via a shut-off 212-1 included in or coupled to metering device 200, supply of the first utility commodity to the location. In some embodiments, third metering device 200-3, using shut-off 212 included in or coupled to first metering device 200-1, automatically shuts off supply of the first utility commodity to the location in response to determining that the location is unoccupied and consumption of the first utility commodity is atypical. In other embodiments, third metering device 200-3, using shut-off 212-1 included in or coupled to first metering device 200-1, shuts off supply of the first utility commodity to the location after a user confirms that the atypical consumption of the first utility commodity is unintended. In some embodiments, performing the responsive action includes transmitting the notification to a computing device 300, such as a computing device in a home automation system or a server of a utility service provider, which then performs the one or more responsive actions described above. In such embodiments, computing device 300 transmits the notification to the device of the user associated with the location and/or shuts off supply of the first utility commodity.

Referring back to step 1010, at step 1010, one of the metering devices 200-2 or 200-3 determines whether to make an exception for the consumption of a respective utility commodity not satisfying detection parameters associated with consumption of the respective utility commodity when the location is unoccupied. For example, if method 1000 proceeds to step 1010 after step 1008, second metering device 200-2 determines whether to make an exception for the consumption of the second utility commodity not satisfying detection parameters associated with consumption of the second utility commodity when the location is unoccupied. As another example, if method 1000 proceeds to step 1010 after step 1014, third metering device 200-3 determines whether to make an exception for the consumption of the third utility commodity not satisfying detection parameters associated with consumption of the third utility commodity when the location is unoccupied.

In some embodiments, a respective metering device 200 determines to make an exception for the consumption of a utility commodity not satisfying detection parameters on a random basis. In some embodiments, a respective metering device 200 determines to make an exception for the consumption of a utility commodity not satisfying detection parameters on a periodic basis (e.g., one exception for every thousand "No" decisions). In some embodiments, a respective metering device 200 determines to make an exception for the consumption of a utility commodity not satisfying detection parameters based on a configurable sensitivity setting of the metering device 200. In some embodiments, at step 1010, a respective metering device 200 notifies a computing device 300, such as a computing device in a home automation system or a server of a utility service provider, that consumption of the utility commodity failed to satisfy detection parameters. In such embodiments, computing device 300 then determines whether to make an exception for the consumption of a utility commodity not satisfying detection parameters.

In some embodiments, a respective metering device 200 determines to make an exception for the consumption of the utility commodity not satisfying detection parameters in response to detecting critical errors associated with the metrology data indicative of consumption of the utility commodity. For example, a respective metering device 200 makes an exception in response to detecting that metering application 218 is inaccurately measuring consumption of a utility commodity and/or determining that the RTC included in processor 202 is unable to sync with the correct time. In some embodiments, a respective metering device 200 determines to make an exception for the consumption of a utility commodity not satisfying detection parameters when the utility commodity has not been consumed for a long period of time (e.g., a week, a month, etc.).

If a respective metering device 200 or computing device 300 does not make an exception for the consumption of a utility commodity failing to satisfy detection parameters (1010 - No), then method 1000 proceeds to step 1004. If a respective metering device 200 or computing device 300 does make an exception for the consumption of a utility commodity failing to satisfy detection parameters (1010 - Yes), then method 1000 proceeds to step 1016 at which the respective metering device 200 or computing device 300 flags the location as unoccupied and performs the responsive action.

At step 1018, a respective metering device 200 and/or computing device 300 confirms the accuracy of the detection of atypical consumption of the first utility commodity when the location is unoccupied. For example, when performing the responsive action at step 1016 includes prompting a user to confirm whether consumption of the first utility commodity was atypical when the location was unoccupied, the user provides feedback indicating the accuracy of the detection. Feedback from the user can include an indication as to whether consumption of the first utility commodity actually was atypical, whether the location actually was unoccupied, and/or whether consumption of the first utility commodity was atypical while the location was unoccupied.

At step 1020, a respective metering device 200 and/or 300 updates the detection algorithm based on the user feedback. Updating the detection algorithm can include adjusting one or more weights of machine learning model 320, 700, and/or 800, adjusting one or more detection parameters 222, and/or adjusting detection parameters 318. Updating detection parameters 222 and/or 318 includes, for example, updating one or more thresholds associated with respective amounts and durations of consumption of the plurality of utility commodities based on the detected atypical consumption of the first utility commodity when the location is unoccupied. Updating the detection algorithm can also include updating respective regular patterns of consumption of the utility commodities when the location is occupied and unoccupied. After updating the detection parameters, method 1000 proceeds to step 1002 at which computing device 300 configures metering devices 200 and/or other computing devices 300 with updated detection parameters, such as updated detection parameters 222 and/or updated detection parameters 318.

### System Overview

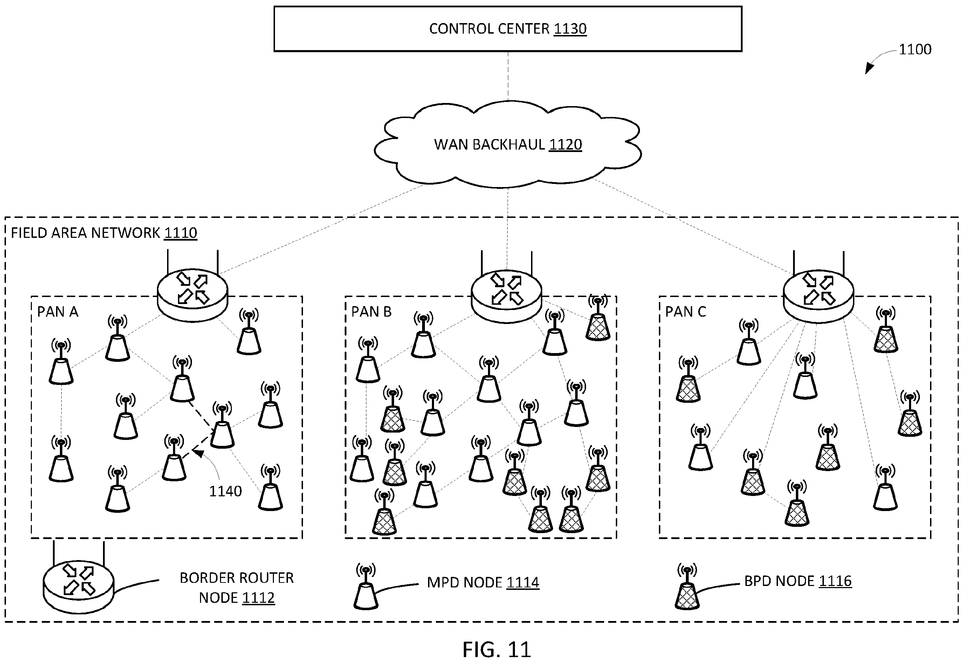

FIG. 11 illustrates a network system configured to implement one or more aspects of the various embodiments. As shown, network system 1100 includes a field area network (FAN) 1110, a wide area network (WAN) backhaul 1120, and a control center 1130. FAN 1110 is coupled to control center 1130 via WAN backhaul 1120. Control center 1130 is configured to coordinate the operation of FAN 1110.

FAN 1110 includes personal area network (PANs) A, B, and C. PANs A and B are organized according to a mesh network topology, while PAN C is organized according to a star network topology. Each of PANs A, B, and C includes various network devices including at least one border router node 1112 and one or more mains-powered device (MPD) nodes 1114. PANs B and C further include one or more battery-powered device (BPD) nodes 1116. Any of the one or more MPD nodes 1114 or the BPD nodes 1116 can be used to implement the techniques discussed above with respect to FIGs. 1-10. In various embodiments, metering device 102, metering device 104, computing device 106, metering device 200, and computing device 300 are implemented as node 1114 or 1116.

MPD nodes 1114 draw power from an external power source, such as mains electricity or a power grid. MPD nodes 1114 typically operate on a continuous basis without powering down for extended periods of time. BPD nodes 1116 draw power from an internal power source, such as a battery. BPD nodes 1116 typically operate intermittently and power down, go to very low power mode, for extended periods of time in order to conserve battery power.

MPD nodes 1114 and BPD nodes 1116 are coupled to, or included within, a utility distribution infrastructure (not shown) that distributes a resource to consumers. MPD nodes 1114 and BPD nodes 1116 gather sensor data related to the distribution of the resource, process the sensor data, and communicate processing results and other information to control center 1130. Border router nodes 1112 operate as access points to provide MPD nodes 1114 and BPD nodes 1116 with access to control center 1130.

Any of border router nodes 1112, MPD nodes 1114, and BPD nodes 1116 are configured to communicate directly with one or more adjacent nodes via bi-directional communication links 1140. The communication links 1140 may be wired or wireless links, although in practice, adjacent nodes of a given PAN exchange data with one another by transmitting data packets via wireless radio frequency (RF) communications. The various node types are configured to perform a technique known in the art as "channel hopping" in order to periodically receive data packets on varying channels. As known in the art, a "channel" may correspond to a particular range of frequencies. In one embodiment, a node may compute a current receive channel by evaluating a Jenkins hash function based on a total number of channels and the media access control (MAC) address of the node.

Each node within a given PAN can implement a discovery protocol to identify one or more adjacent nodes or "neighbors." A node that has identified an adjacent, neighboring node can establish a bi-directional communication link 1140 with the neighboring node. Each neighboring node may update a respective neighbor table to include information concerning the other node, including one or more of the MAC address of the other node, listening schedule information for the other node, a received signal strength indication (RSSI) of the communication link 1140 established with that node, and the like.

Nodes can compute the channel hopping sequences of adjacent nodes to facilitate the successful transmission of data packets to those nodes. In embodiments where nodes implement the Jenkins hash function, a node computes a current receive channel of an adjacent node using the total number of channels, the MAC address of the adjacent node, and a time slot number assigned to a current time slot of the adjacent node.

Any of the nodes discussed above may operate as a source node, an intermediate node, or a destination node for the transmission of data packets. A given source node can generate a data packet and then transmit the data packet to a destination node via any number of intermediate nodes (in mesh network topologies). The data packet can indicate a destination for the packet and/or a particular sequence of intermediate nodes to traverse in order to reach the destination node. In one embodiment, each intermediate node can include a forwarding database indicating various network routes and cost metrics associated with each route.

Nodes can transmit data packets across a given PAN and across WAN backhaul 1120 to control center 1130. Similarly, control center 1130 can transmit data packets across WAN backhaul 1120 and across any given PAN to a particular node included therein. As a general matter, numerous routes can exist which traverse any of PANs A, B, and C and include any number of intermediate nodes, thereby allowing any given node or other component within network system 1100 to communicate with any other node or component included therein.

Control center 1130 includes one or more server machines (not shown) configured to operate as sources for, or destinations of, data packets that traverse within network system 1100. The server machines can query nodes within network system 1100 to obtain various data, including raw or processed sensor data, power consumption data, node/network throughput data, status information, and so forth. The server machines can also transmit commands and/or program instructions to any node within network system 1100 to cause those nodes to perform various operations. In one embodiment, each server machine is a computing device configured to execute, via a processor, a software application stored in a memory to perform various network management operations.
1. According to some embodiments, a method comprises receiving, by a computing device, metrology data indicating consumption of a plurality of utility commodities at a location; determining, by the computing device based on the metrology data, that the location is not occupied; determining, by the computing device, that the metrology data indicates that consumption of a first utility commodity of the plurality of utility commodities is atypical; and in response to determining that the location is not occupied and that consumption of the first utility commodity is atypical, performing, by the computing device, a responsive action.
2. The method according to clause 1, wherein the first utility commodity is water and the plurality of utility commodities includes at least one of gas or electricity.
3. The method according to clause 1 or clause 2, wherein the metrology data is received from one or more metering devices.
4. The method according to any of clauses 1-3, wherein determining that the location is not occupied comprises providing, by the computing device, the metrology data as an input to a machine learning model; and receiving, by the computing device, an output from the machine learning model that indicates the location is not occupied.
5. The method according to any of clauses 1-4, wherein determining that consumption of the first utility commodity is atypical comprises providing, by the computing device, the metrology data as an input to a machine learning model; and receiving, by the computing device, an output from the machine learning model that indicates consumption of the first utility commodity is atypical.
6. The method according to any of clauses 1-5, wherein determining that the metrology data indicates that the consumption of the first utility commodity is atypical comprises comparing an amount of the consumption of the first utility commodity during a time period to a detection threshold associated with consumption of the first utility commodity.
7. The method according to any of clauses 1-6, wherein determining that the location is not occupied comprises comparing an amount of the consumption of a second utility commodity of the plurality of utility commodities during a time period to a detection threshold for the second utility commodity.
8. The method according to any of clauses 1-7, wherein performing the responsive action comprises sending an instruction to a metering device to shut off a supply of the first utility commodity to the location.
9. The method according to any of clauses 1-8, wherein performing the responsive action comprises transmitting, by the computing device, a notification to a device associated with the location, the notification including an indication that atypical consumption of the first utility commodity has occurred when the location is unoccupied.
10. The method according to any of clauses 1-9, further comprising updating a machine learning model or a detection threshold based on a response to the notification.
11. According to some embodiments, one or more non-transitory computer-readable media storing instructions that, when executed by one or more processors of a first computing device, cause the one or more processors to perform the operations comprising receiving consumption data for a plurality of utility commodities at a premises from one or more utility meters; detecting that the premises is not occupied based on the consumption data; detecting that usage of a first utility commodity of the plurality of utility commodities is atypical based on the consumption data; and in response to detecting that the premises is not occupied and that usage of the first utility commodity is unexpected, performing a responsive action.
12. The one or more non-transitory computer-readable media according to clause 11, wherein the first utility commodity is water and the plurality of utility commodities includes at least one of gas or electricity.
13. The one or more non-transitory computer-readable media according to clause 11 or clause 12, wherein the operations further comprise receiving one or more detection parameters; and detecting that the premises is not occupied further based on the detection parameters.
14. The one or more non-transitory computer-readable media according to any of clauses 11-13, wherein the operations further comprise receiving one or more detection parameters; and detecting that the usage of the first utility commodity is atypical further based on the detection parameters.
15. The one or more non-transitory computer-readable media according to any of clauses 11-14, wherein detecting that usage of the first utility commodity is atypical comprises determining that a pattern of usage of the first utility commodity during a time when the first utility commodity is used diverges from an expected pattern of consumption of the first utility commodity.
16. The one or more non-transitory computer-readable media according to any of clauses 11-15, wherein the responsive action comprises notifying a user associated with the premises that unexpected consumption of the first utility commodity is occurring while the premises is unoccupied.
17. According to some embodiments, a network device comprising one or more processors and a memory storing executable instructions that, when executed by the one or more processors, cause the one or more processors to receive metrology data indicating consumption of a plurality of utility commodities at a property from a second network device and a third network device; determine that the property is not occupied based on the metrology data; determine that undesired consumption of a first utility commodity is occurring based on the metrology data; and in response to determining that the property is not occupied and that undesired consumption of the first utility commodity is occurring, performing a responsive action.
18. The network device according to clause 17, wherein the first utility commodity is water and the plurality of utility commodities includes at least one of gas or electricity.
19. The network device according to clause 17 or clause 18, wherein the second network device is a metering device configured to monitor consumption of the first utility commodity; and the third network device is a metering device configured to monitor consumption of a second utility commodity of the plurality of utility commodities.
20. The network device according to any of clauses 17-19, wherein the network device is a metering device configured to monitor consumption of a third utility commodity of the plurality of utility commodities, a home automation system, or a server of a utility service provider.

Any and all combinations of any of the claim elements recited in any of the claims and/or any elements described in this application, in any fashion, fall within the contemplated scope of the present protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments can be embodied as a system, method or computer program product. Accordingly, aspects of the present disclosure can take the form of an entirely hardware embodiment, an entirely software embodiment (including firmware, resident software, micro-code, etc.) or an embodiment combining software and hardware aspects that can all generally be referred to herein as a "module," a "system," or a "computer." In addition, any hardware and/or software technique, process, function, component, engine, module, or system described in the present disclosure can be implemented as a circuit or set of circuits. Furthermore, aspects of the present disclosure can take the form of a computer program product embodied in one or more computer readable medium(s) having computer readable program code embodied thereon.

Any combination of one or more computer readable medium(s) can be utilized. The computer readable medium can be a computer readable signal medium or a computer readable storage medium. A computer readable storage medium can be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium can be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions can be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors can be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams can represent a module, segment, or portion of code, which comprises one or more executable instructions for implementing the specified logical function(s). It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure can be devised without departing from the basic scope thereof, and the scope thereof is determined by the claims that follow. Moreover, in the above description, numerous specific details are set forth to provide a more thorough understanding of the various embodiments. However, it will be apparent to one of skilled in the art that the inventive concepts may be practiced without one or more of these specific details.

## Claims

1. A method comprising:
receiving, by a computing device, metrology data indicating consumption of a plurality of utility commodities at a location;
determining, by the computing device based on the metrology data, that the location is not occupied;
determining, by the computing device, that the metrology data indicates that consumption of a first utility commodity of the plurality of utility commodities is atypical; and
in response to determining that the location is not occupied and that consumption of the first utility commodity is atypical, performing, by the computing device, a responsive action.

2. The method of claim 1, wherein the first utility commodity is water and the plurality of utility commodities includes at least one of gas or electricity.

3. The method of claim 1 or 2, wherein the metrology data is received from one or more metering devices.

4. The method of any preceding claim, wherein determining that the location is not occupied comprises:
providing, by the computing device, the metrology data as an input to a machine learning model; and
receiving, by the computing device, an output from the machine learning model that indicates the location is not occupied.

5. The method of any preceding claim, wherein determining that consumption of the first utility commodity is atypical comprises:
providing, by the computing device, the metrology data as an input to a machine learning model; and
receiving, by the computing device, an output from the machine learning model that indicates consumption of the first utility commodity is atypical.

6. The method of any preceding claim, wherein determining that the metrology data indicates that the consumption of the first utility commodity is atypical comprises comparing an amount of the consumption of the first utility commodity during a time period to a detection threshold associated with consumption of the first utility commodity.

7. The method of any preceding claim, wherein determining that the location is not occupied comprises comparing an amount of the consumption of a second utility commodity of the plurality of utility commodities during a time period to a detection threshold for the second utility commodity.

8. The method of any preceding claim, wherein performing the responsive action comprises sending an instruction to a metering device to shut off a supply of the first utility commodity to the location.

9. The method of any preceding claim, wherein performing the responsive action comprises transmitting, by the computing device, a notification to a device associated with the location, the notification including an indication that atypical consumption of the first utility commodity has occurred when the location is unoccupied; and optionally
updating a machine learning model or a detection threshold based on a response to the notification.

10. One or more computer-readable media storing instructions which, when executed by one or more processors of a first computing device, cause the one or more processors to perform the method of any preceding claim.

11. The one or more computer readable media of claim 10, wherein detecting that usage of the first utility commodity is atypical comprises determining that a pattern of usage of the first utility commodity during a time when the first utility commodity is used diverges from an expected pattern of consumption of the first utility commodity.

12. A network device, comprising:
one or more processors; and
a memory storing executable instructions that, when executed by the one or
more processors, cause the one or more processors to:
receive metrology data indicating consumption of a plurality of utility commodities at a property from a second network device and a third network device;
determine that the property is not occupied based on the metrology data;
determine that atypical consumption of a first utility commodity is occurring based on the metrology data; and
in response to determining that the property is not occupied and that atypical consumption of the first utility commodity is occurring, performing a responsive action.

13. The network device of claim 12 wherein the memory stores executable instructions that, when executed by the one or more processors, cause the one or more processors to carry out the method of any of claims 2 to 9, and wherein the network device comprises a computing device.

14. The network device of claim 13, wherein:
the second network device is a metering device configured to monitor consumption of the first utility commodity; and
the third network device is a metering device configured to monitor consumption of a second utility commodity of the plurality of utility commodities.

15. The network device of claim 13, wherein the network device is a metering device configured to monitor consumption of a third utility commodity of the plurality of utility commodities, a home automation system, or a server of a utility service provider.
